Europäisches Patentamt

European Patent Office

Office européen des brevets

(19)

(11) **EP 0 550 295 B1**

(12) **FASCICULE DE BREVET EUROPEEN**

(45) Date de publication et mention
de la délivrance du brevet:
**27.05.1998 Bulletin 1998/22**

(51) Int Cl.[6]: **C09C 1/36**, C09C 3/10,
D21H 17/67

(21) Numéro de dépôt: **92402979.6**

(22) Date de dépôt: **04.11.1992**

(54) **Procédé de préparation de papiers et lamifiés de papier.**

Verfahren zur Herstellung von Papier und Papierlaminaten.

Process for the preparation of paper and paper laminates.

(84) Etats contractants désignés:
**BE DE DK ES FR GB GR IE IT LU NL PT**

(30) Priorité: **30.12.1991 FR 9116296**

(43) Date de publication de la demande:
**07.07.1993 Bulletin 1993/27**

(73) Titulaire: **RHODIA CHIMIE
92408 Courbevoie Cédex (FR)**

(72) Inventeurs:
• **Gerard, Bernard
F-68100 Mulhouse (FR)**
• **Lorang, Rémy
F-68700 Cernay (FR)**
• **Mazzacavalo, Anny
F-88160 Le Tilhot (FR)**

(74) Mandataire: **Dubruc, Philippe et al
RHODIA CHIMIE
Direction de la Propriété Industrielle
25, quai Paul Doumer
92408 Courbevoie Cédex (FR)**

(56) Documents cités:
**EP-A- 0 045 562          EP-A- 0 281 134
EP-A- 0 491 346          US-A- 3 425 855
US-A- 4 874 466**

• **WORLD PATENTS INDEX LATEST ACCESSION
NO. 81-14401D, WEEK 09 DERWENT
PUBLICATIONS LTD, LONDON GB**

Remarques:
Le dossier contient des informations techniques
présentées postérieurement au dépôt de la
demande et ne figurant pas dans le présent
fascicule.

## Description

La présente invention concerne un procédé de préparation de papier ou de lamifiés de papier dans lequel on utilise comme pigment opacifiant au moins une particule de dioxyde de titane à charge de surface contrôlée.

On sait que le dioxyde de titane, notamment sous sa forme rutile, peut être utilisé de façon avantageuse comme pigment opacifiant dans la fabrication du papier, en particulier papier pour lamifiés. En effet, le dioxyde de titane est un pigment blanc qui possède un indice de réfraction élevé ; c'est un des composés qui, pour une taille de particules optimum (en général 0,2 à 0,3 µm), diffuse le mieux la lumière.

Il est également connu de fabriquer des lamifiés (ou stratifiés) à base d'une résine, notamment une résine de mélamine ou de mélamine-formol, et de papier pigmenté par du dioxyde de titane. Ainsi, par exemple, le papier pigmenté est imprégné d'une solution de la résine, après quoi plusieurs feuilles de papier pigmenté imprégné de résine sont stratifiées par des techniques de pressage à chaud. De manière connue, afin que les stratifiés de papier pigmenté présentent une faible dégradation de la teinte après exposition à la lumière, c'est-à-dire une tenue à la lumière plus que satisfaisante, le pigment de dioxyde de titane subit préalablement à son incorporation un traitement de surface minéral généralement destiné à lui conférer une stabilité photochimique élevée ; ce traitement de surface minéral peut être par exemple effectué à l'aide de silice, d'alumine et/ou d'oxyde de zinc, éventuellement en mélange avec des phosphates.

L'incorporation du dioxyde de titane dans le papier consiste habituellement à fixer le dioxyde de titane sur les fibres de cellulose prédispersées dans l'eau, cette fixation se faisant essentiellement par attraction électrostatique entre la fibre de cellulose et la particule de dioxyde de titane. La fibre de cellulose est par nature chargée négativement.

De plus, lors de la préparation du papier, il est connu d'employer un agent d'amélioration de la résistance à l'état humide (ou agent de durcissement à l'état humide), notamment un sel d'ammonium quaternaire de polymère à base d'épichlorhydrine (par l'exemple de polymère épichlorhydrine/diméthylamine), qui fait office de "pont" entre les fibres de cellulose (chargées électronégativement). Cet agent va assurer la solidité du papier notamment lors de son imprégnation par la solution de résine lors de la préparation de lamifiés. Mais, cet agent peut avoir des conséquences néfastes sur le pigment de dioxyde de titane : il peut provoquer sa floculation et, surtout, diminuer sa rétention physico-chimique, notamment dans le cas où l'on augmente la quantité d'agent employé ; le pigment de dioxyde de titane peut alors se décrocher en partie des fibres de cellulose.

Enfin, l'opacité du papier pigmenté de dioxyde de titane ou du lamifié à base dudit papier dépend notamment de la teneur en dioxyde de titane du papier ; elle est donc fonction du taux de fixation sur les fibres de cellulose et de la rétention physico-chimique du dioxyde de titane.

Bien qu'il existe des dioxydes de titane utilisables pour cette application en papeterie, ceux-ci présentent encore néanmoins certains inconvénients importants.

Ainsi, par exemple, les dioxydes de titane actuellement utilisés comme pigments opacifiants présentent une rétention physico-chimique qui peut paraître insuffisante. La rétention physico-chimique quantifie l'aptitude du dioxyde de titane à être retenu sur les fibres de cellulose du papier ; le taux de rétention est défini, dans cette application, comme le rapport de la quantité de dioxyde de titane effectivement fixé sur les fibres de cellulose à la quantité totale de dioxyde de titane utilisé lors de l'incorporation. Cette faiblesse dans la rétention physico-chimique nuit à l'économie du procédé, pose des problème de pollution et de recyclage des effluents, et diminue les propriétés finales d'opacité du papier ou du lamifié.

Par ailleurs, les dioxydes de titane actuellement utilisés comme pigments opacifiants sont assez sensibles à l'emploi d'agent d'amélioration de la résistance à l'état humide, en ce sens que leur rétention physico-chimique et, par conséquent, l'opacité du papier pigmenté ou du stratifié à base de papier pigmenté diminuent très sensiblement lorsque la quantité utilisée dudit agent augmente.

Il est également connu que le dioxyde de titane a tendance à subir un phénomène d'auto-floculation, c'est-à-dire à s'agglomérer si la concentration en ions contenus dans l'eau utilisée lors de la préparation du papier est élevée (eau dure).

La présente invention tend notamment à remédier aux inconvénients précités.

Dans l'art antérieur, il a été proposé d'ajouter des polymères à des dispersions de particules de dioxyde de titane : les documents EP-A-0 045 562, US-A-4 874 466, EP-A-0 281 134, JP-A-55 163 298 et EP-A-0 491 346 (le contenu de ce dernier document étant compris dans l'état de la technique au sens de l'article 54(3) CBE) décrivent la préparation de dispersions aqueuses de pigments de dioxyde de titane dans lesquelles des polymères cationiques sont ajoutés. Dans chacun de ces documents, les dispersions obtenues sont directement introduites dans le milieu de fabrication du papier.

Le document US-A-3 425 855 décrit des pigments de dioxyde de titane revêtus en surface de polyéthylèneimine et l'utilisation de ces pigments dans les peintures et les métaux organiques.

Un objet de la présente invention est de proposer un procédé de préparation de papier dans lequel on utilise des particules de dioxyde de titane à rétention physico-chimique améliorée.

En particulier, il a été mis au point par la Demanderesse un procédé de préparation de papier dont les caractéristiques permettent d'influencer avantageusement des propriétés comme la rétention physico-chimique du pigment sur les fibres de cellulose, et donc l'opacité du papier pigmenté ou du lamifié (ou stratifié) à base dudit papier pigmenté, tout en conservant à ces derniers une bonne tenue à la lumière.

L'invention concerne donc un procédé de préparation de papier dans lequel on utilise comme pigment opacifiant au moins une particule de dioxyde de titane à la surface de laquelle est adsorbée au moins un polymère cationique, choisi parmi les copolymères d'acrylamide avec un monomère cationique ou un homopolymère de chlorure de diallyldialkylammonium, ladite particule étant obtenue par pulvérisation d'une solution aqueuse du polymère cationique à la surface de la particule de dioxyde de titane puis séchage entre 110 et 200°C.

Le dioxyde de titane est, de préférence, sous forme rutile, mais il peut également être sous forme anatase.

La teneur en polymère cationique d'une particule généralement comprise entre 0,05 et 10 % en poids de préférence, entre 0,1 et 1,5 % en poids et, de manière encore plus préférée, entre 0,1 et 1,1 % en poids.

Pour un emploi dans les papiers pour lamifiés ou stratifiés, le polymère cationique utilisé est de préférence stable à la lumière et à la température.

La méthode d'obtention des pigments consiste à pulvériser, par exemple grâce à un pulvérisateur, sous air comprimé, la solution aqueuse du polymère cationique sur les particules de dioxyde de titane ; celles-ci, une fois traitées, sont alors séchées entre 110 et 200°C, puis elles peuvent être micronisées sous pression d'air ou de vapeur.

La particule de dioxyde de titane peut subir un traitement de surface minéral préalablement au dépôt du polymère cationique, traitement destiné généralement à conférer à ladite particule une stabilité photochimique élevée. Ce type de traitement minéral effectué dans le but précité est bien connu de l'homme du métier. Il consiste notamment à déposer une couche minérale à la surface de la particule de dioxyde de titane, de préférence sous forme rutile ; cette couche minérale est généralement formée d'un ou plusieurs oxydes ou oxyhydroxydes ; elle est par exemple formée d'au moins un composé choisi parmi les oxydes et les oxyhydroxydes, de préférence les oxyhydroxydes, de silicium, d'aluminium, de titane, de zinc, de zirconium, de cérium et d'antimoine. Ces oxydes et oxyhydroxydes peuvent être utilisés éventuellement en mélange avec des phosphates. Leur dépôt à la surface de la particule de dioxyde de titane est habituellement obtenu par hydrolyse ou neutralisation des sels hydrosolubles correspondants. Ce dépôt est, selon les cas, accompagné ou non d'une calcination à une température habituellement supérieure à 400°C ou à 600°C.

Le polymère cationique employé dans la présente invention présente en général une masse moléculaire moyenne comprise entre 10 000 et 3 000 000, par exemple entre 20 000 et 1 000 000.

Selon une variante préférée de l'invention, ce polymère cationique est un polymère de sel d'ammonium, de sulphonium ou de phosphonium quaternaire, de préférence de sel d'ammonium quaternaire.

Ainsi, et de manière préférée, ledit polymère est un copolymère d'acrylamide avec un monomère cationique.

Ce monomère cationique peut être choisi notamment parmi les sels de diallyldialkyl ammonium, les sels d'acrylate et de méthacrylate d'alkyltrialkyl ammonium, les sels d'acrylate et de méthacrylate d'hydroxyalkyltrialkyl ammonium, les sels d'acrylate et de méthacrylate d'alkyldialkyl sulphonium, les sels d'ammonium quaternaire d'acrylates et de méthacrylates d'aminoalkyle.

Plus particulièrement, ledit monomère est choisi dans le groupe formé par le chlorure de diallyldiméthyl ammonium $((CH_3)_2 \overset{+}{N} (CH_2CH = CH_2)_2 \; Cl^-)$, le chlorure de diallyldiéthyl ammonium $((C_2H_5)_2 \overset{+}{N} CH_2CH = CH_2)_2 \; Cl^-)$, le chlorure de méthacrylate d'éthyltriméthylammonium $(CH_2 = C(CH_3) - COOCH_2CH_2\overset{+}{N} (CH_3)_3 \; Cl^-)$, le méthyl-sulphate de méthacrylate d'éthyltriméthylammonium $(CH_2 = C(CH_3) - COOCH_2CH_2 \overset{+}{N} (CH_3)_3 \; CH_3OSO_3^-)$ le chlorure de méthacrylate d'hydroxypropyltriméthylammonium $(CH_2 = C(CH_3) \overset{+}{-} COOCH_2CH(OH)CH_2 \overset{+}{N} (CH_3)_3 \; Cl^-)$, le méthyl-sulphate d'acrylate d'éthyldiméthyl sulphonium $(CH_2 = CH-COOC_2H_4\overset{+}{S}(CH_3)_2CH_3OSO_3^-)$, les sels d'ammonium quaternaire de méthacrylate d'aminoéthyle $(CH_2 = C(CH_3) COOCH_2CH_2NH_2)$.

De préférence, le polymère cationique employé dans l'invention est un copolymère de chlorure de diallyldiméthyl ammonium et d'acrylamide.

Ledit polymère cationique peut également consister en un homopolymère de chlorure de diallyldialkyl (par exemple diallyldiméthyl) ammonium.

Ce polymère cationique peut enfin être éventuellement choisi dans le groupe formé par les polyamines de condensation et les polyimines (telles qu'une polyéthylèneimine) après quaternarisation.

La nature et la quantité du ou des polymères cationiques fixés à la surface de la particule de dioxyde de titane permet d'en ajuster à volonté le potentiel zêta (donc la charge).

Cela est avantageux dans le domaine de la papeterie. En effet, cela peut permettre au papetier de disposer de toute une gamme de particules de dioxyde de titane dont le potentiel zêta sera de négatif à très positif (donc dont la charge de la surface sera anionique à très cationique (électropositive)). Or, notamment suivant la dureté de l'eau mise en oeuvre lors de la préparation du papier, le papetier devra choisir un pigment opacifiant dont le potentiel zêta sera de négatif à très positif.

De manière avantageuse, les particules de dioxyde de titane selon l'invention présentent un potentiel zêta adapté au milieu liquide dans lequel elles sont introduites(par exemple le milieu de préparation du papier, qui contient en outre de l'eau et des fibres de cellulose). En particulier, le potentiel zêta desdites particules contenues dans le milieu liquide peut être positif jusqu'à un pH d'au moins 5,5, de préférence d'au moins 7 et, de manière encore plus préférée, d'au moins 8,5. Selon cette variante avantageuse de l'invention, lesdites particules sont ainsi caractérisées en ce qu'elles présentent un point isoélectrique (PIE) d'au moins 5,5, de préférence d'au moins 7 et, de manière encore plus préférée, d'au moins 8,5.

Il est rappelé que lorsqu'une particule en suspension se déplace au sein d'un liquide (sous l'action de l'agitation thermique, d'un champ de gravité par exemple), elle est entourée d'une couche limite où la vitesse du fluide passe continument de V, vitesse de la particule, à 0 quand on s'éloigne de la surface. La décroissance de la vitesse s'arrête assez nettement pour que l'on puisse définir une surface extérieure à la particule, séparant les molécules qui sont entraînées par celle-ci de celles qui ne le sont pas. Cette surface s'appelle surface de cisaillement.

En pratique cette surface se situe sur la couche de Stern ou légèrement à l'extérieur de celle-ci. Le potentiel électrostatique moyen sur cette surface est le potentiel zêta. Parmi toutes les valeurs du potentiel entre la surface et l'infini, c'est la seule mesurable.

Le principe de la mesure du potentiel zêta consiste notamment en la mesure de la vitesse de la particule en suspension en déplacement dans un champ électrique E. Soit V cette vitesse, le rapport $V/E = U$ (en $m^2/Volt.s$) représente la mobilité électrophorétique de la particule. On a alors :

$$\text{Potentiel zêta} = \frac{3}{2}\,\frac{\eta U}{\varepsilon}$$

avec

$\eta$ : viscosité du liquide (en pascal.s)

$\varepsilon$ : constante diélectrique du liquide (en unité S.I.)

$f(Ka)$ : facteur variant de 2/3 à 1 selon le rayon de la particule (a) par rapport à l'épaisseur de la double couche (1/K).

Le point isoélectrique (PIE) correspond au cas où le système étudié présente un potentiel zêta moyen nul. Expérimentalement cela se traduit par une vitesse de déplacement nulle dans un champ électrique non nul. Le point isoélectrique est alors défini par le pH d'une suspension de dioxyde de titane selon l'invention (dans le liquide) pour lequel la mobilité électrophorétique d'une particule de ce dioxyde de titane dans le liquide est nulle ("Zeta Potential in Colloid Science", Robert J.HUNTER, Academic Press, 1981)

Le potentiel zêta peut être mesuré (comme dans les exemples ci-après) à l'aide d'un appareil vendu sous la désignation commerciale LAZER ZEE METER (Modèle 501-PEN KEM)

Les particules de dioxyde de titane présentant un potentiel zêta positif à un pH d'au moins 5,5, de préférence d'au moins 7 et, de manière encore plus préférée, d'au moins 8,5 sont particulièrement avantageuses pour la préparation du papier, notamment du papier pour lamifiés, plus particulièrement du papier lamifié pour post-forming (qui est un papier pouvant épouser les formes arrondies sans rupture). En effet, le milieu de préparation du papier, notamment du papier pour lamifié, présente généralement un pH de l'ordre de 5,5 à 7 et celui du papier lamifié pour post-forming un pH de l'ordre de 8 à 8,5, donc des pH auxquels la charge des particules de dioxyde de titane selon l'invention est de préférence encore cationique. La fixation des particules de dioxyde de titane sur les fibres de cellulose est grandement favorisée par l'attraction électrostatique entre la charge anionique des fibres de cellulose et la charge cationique desdites particules. La rétention physico-chimique desdites particules et donc l'opacité du papier pigmenté et d'un lamifié à base dudit papier pigmenté imprégné par une résine sont très sensiblement améliorées, notamment lorsque les eaux employées lors de la préparation du papier ont une concentration élevée en ions. De plus, le phénomène d'auto-floculation desdites particules en présence de ces mêmes eaux est très sensiblement atténué, voire inhibé.

De même, le pigment opacifiant constitué par lesdites particules de dioxyde de titane est alors peu sensible à l'action d'un agent d'amélioration de la résistance à l'état humide qui est traditionnellement utilisé, en une quantité de 1 à 5 % en poids, de préférence de 3 à 5 % en poids par rapport au poids de l'ensemble pigment opacifiant + fibres de cellulose, lors de la préparation du papier, contrairement au cas notamment où le polymère cationique serait ajouté postérieurement, dans le milieu de préparation du papier et non plus fixé préalablement à la particule de dioxyde de titane (cet agent est employé pour assurer la solidité du papier notamment lors de sont imprégnation par une solution d'une résine pour préparer un lamifié à base dudit papier).

Tout procédé de préparation de papier (ou de formulation papier) connu de l'homme du métier peut être employé (en mettant en oeuvre le pigment opacifiant) obtenu par pulvérisation d'une solution aqueuse du polymère cationique à la surface de la particule de dioxyde de titane puis séchage entre 110 et 200°C) pour préparer le papier. L'invention n'est pas limitée à un procédé particulier de préparation. Le procédé selon l'invention consiste habituellement à partir d'un mélange d'eau, de fibres de cellulose et du pigment opacifiant particulier, en présence éventuellement d'un agent d'amélioration de la résistance à l'état humide. Ledit agent est par exemple constitué d'un sel d'ammonium quaternaire de polymères à base d'épichlorhydrine (par exemple de polymères épichlorhydrine/diméthylamine).

L'invention concerne également un procédé de préparation de lamifié (ou stratifié) à base de papier, notamment pour postformage, dans lequel on utilise comme pigment opacifiant au moins une particule de dioxyde de titane telle que définie ci-dessus et en outre au moins une résine (notamment une résine mélamine ou mélamine-formol)

Tout procédé de préparation de lamifiés de papier connu de l'homme du métier peut être employé (en mettant en oeuvre un papier pigmenté à l'aide du pigment opacifiant) obtenu par pulvérisation d'une solution aqueuse du polymère cationique à la surface de la particule de dioxyde de titane puis séchage entre 110 et 200°C) pour préparer les lamifiés. L'invention n'est pas limitée à un procédé particulier de préparation. Ainsi, par exemple, le papier pigmenté peut être imprégné d'une solution hydroalcoolique de résine, après quoi, plusieurs feuilles de papier pigmenté imprégné de résine sont stratifiées par des techniques de pressage à chaud. Le papier pigmenté peut contenir un agent d'amélioration de la résistance à l'état humide.

Des méthodes de préparation de lamifiés à base de papier sont décrites dans les brevets FR 1 473 692, 1 504 211 et 1 537 805 (qui décrivent également des traitements de surface minéraux des particules de dioxyde de titane).

Les exemples suivants illustrent l'invention sans toutefois en limiter la portée.

Exemple 1

Dans un bécher en verre de 5 litres, maintenu en rotation à 25 tours/minute, on introduit 500 grammes de dioxyde de titane (commercialisé par la société Thann et Mulhouse sous la référence RL 18). Ledit dioxyde de titane est un pigment de dioxyde de titane rutile ayant subi un traitement de surface minéral lui conférant à un pH de 5,5 un potentiel zêta négatif. 100 ml de solution aqueuse de polymère cationique sont pulvérisés, grâce à un pulvérisateur, sous air comprimé, sur ledit dioxyde de titane. Le dioxyde de titane ainsi traité est ensuite sèché à 160°C sous une résistance chauffante. Durant toute l'opération de traitement, le bécher est maintenu en rotation.

Dans le tableau 1 ci-dessous sont mentionnées les valeurs du potentiel zêta, à un pH de 7 et à un pH de 8,5, du dioxyde de titane traité par différents polymères cationiques et du dioxyde de titane non traité ("RL 18 "). Ces valeurs ont été mesurées sur l'appareil de zêtamétrie LAZER ZEE METER (Modèle 501-PEN KEM).

## TABLEAU 1

| | Quantité de polymère (% pds) | Potentiel zêta (en millivolt) | |
| --- | --- | --- | --- |
| | | pH = 7 | pH = 8,5 |
| TiO2 ("RL 18") | 0 | -35 | -40 |
| TiO2 + Polyéthylénéimine | 1 | +48 | +42 |
| TiO2 + "Polybrene" | 1 | +50 | +47 |
| TiO2 + "Acurac 181" | 0,1 | +33 | +25 |
| TiO2 + "Nalco 8105" | 0,1 | -19 | -30 |
| | 0,5 | +40 | +27 |
| | 1 | +53 | +47 |

Dans le tableau 1, la quantité de polymère est le pourcentage en poids de polymère du dioxyde de titane traité.

Le "Polybrene" est un polyméthobromure de diméthyl-1,5 diaza-1,5 undecaméthylène fabriqué par la société Aldrich.

Le "Nalco 8105" est un copolymère d'acrylamide et de chlorure de diallyldiméthyl ammonium et est fabriqué par la société Nalco.

L'"Acurac 181" est un copolymère d'acrylamide et d'un monomère cationique et est fabriqué par la société Cyanamid.

Exemple 2

On mesure ici, pour divers dioxydes de titane, le taux de dioxyde de titane retenu (taux de rétention en $TiO_2$) dans une feuille de papier (ou formette) de 80 g/m$^2$, préparée, sans ajout d'agent d'amélioration de la résistance à l'état humide, à un pH de 6,5 et 8,5.

1) Dans un bécher, on mélange sous agitation 100 parts de fibres de cellulose prédispersées à 40 g/l dans de l'eau et 70 parts de particules de dioxyde de titane prédispersées à 40 % en poids dans de l'eau (le volume fibres de cellulose + dioxyde de titane est déterminé de manière à obtenir finalement une formette de 80 g/m$^2$).

Le pH est ensuite ajusté à la valeur de 6,5 par ajout d'acide chlorhydrique.

Puis on effectue une dilution avec 3 litres d'eau ; on prélève 500 cm$^3$ de suspension obtenue qu'on utilise pour fabriquer une formette sur l'appareil Haage (tireuse de formette de laboratoire).

La formette de 80 g/m$^2$ obtenue est séchée.

2) L'expérience 1) est répétée, le pH étant ici ajusté à la valeur de 8,5 par ajout de carbonate de sodium.

Les formettes de 80 g/m$^2$ obtenues en 1) et 2) sont ensuite calcinées à 800°C ; on mesure alors la masse de cendres obtenues : de part la préparation, cette masse de cendres correspond à la masse de dioxyde de titane contenu dans la formette.

Le taux de rétention en $TiO_2$ correspond alors au rapport Masse de cendres/Masse de dioxyde de titane engagé dans la préparation.

Ce taux de rétention est mesuré pour trois dioxydes de titane différents notés A, B et C (les résultats sont classés dans le tableau 2) :

- Le dioxyde de titane A correspond au dioxyde de titane électronégatif de départ utilisé dans l'exemple 1 (commercialisé par la société Than et Mulhouse sous la référence RL 18), c'est-à-dire un pigment de dioxyde de titane rutile ayant subi un traitement de surface minéral lui conférant à un pH de 5,5 un potentiel zêta négatif.
- Le dioxyde de titane B (commercialisé par la société Thann et Mulhouse sous la référence RL62) est un pigment de dioxyde de titane rutile ayant subi un traitement de surface minéral lui conférant à un pH de 5,5 un potentiel zêta positif.
- Le dioxyde de titane C est conforme à l'invention : il est obtenu par fixation à la surface du dioxyde de titane A d'un copolymère d'acrylamide et de chlorure de diallyldiméthyl ammonium ("Nalco 8105"); le dioxyde de titane C contient 1 % en poids dudit copolymère cationique.

## TABLEAU 2
## Taux de rétention en $TiO_2$

|  | A | B | C |
|---|---|---|---|
| pH = 6,5 | 5 % | 53 % | 61 % |
| pH = 8,5 | 3 % | 22 % | 53 % |

Exemple 3

On détermine ici l'opacité de stratifiés de formette à 80 g/m$^2$, préparé en présence d'un agent d'amélioration de la résistance à l'état humide, à base d'un polymère épichlorhydrine/diméthylamine, commercialisé par la société Bayer sous le nom de Nadavin LT.

On prépare ainsi des formettes à 80 g/m$^2$ comme dans l'exemple 2, en utilisant, d'une part, du dioxyde de titane A ("RL18"), et, d'autre part, du dioxyde de titane C, en ajustant le pH à une valeur de 8,5 et en ajoutant (lors de l'ajustage du pH) diverses quantités de Nadavin LT.

Dans le cas où on emploie le dioxyde de titane A, le copolymère cationique ("Nalco 8105") est ajouté dans le milieu de préparation de la formette lors de l'ajustage du pH.

On imprègne ensuite par capillarité la formette séchée avec une solution aqueuse à 45 % en poids de résine mélamine-formol pendant 1 minute. On élimine le surplus de résine par passage de la formette imprégnée entre deux baguettes de verre, puis sèchage à 120°C pendant 2 minutes. On effectue ensuite une nouvelle immersion de cette formette dans un bain de résine mélamine-formol pendant 1 minute, puis un essorage de la formette imprégnée entre deux baguettes en acier et enfin un sèchage à 120°C pendant 3 minutes.

La formette ainsi traitée est posée sur un empilage composé de bas en haut de papier kraft mélaminé, d'un couche pour moitié de ce même papier kraft et pour moitié de papier barrière blanc (le papier kraft et la papier barrière sont disponibles dans le commerce).

L'ensemble ainsi formé est placé entre deux plaques en inox et pressé à 150°C sous 100 bars pendant 8 minutes ; il est ensuite refroidi sous presse et démoulé.

On mesure alors, au colorimètre (filtre Y), la valeur de la réflectance sur fond kraft et sur fond barrière blanc.

L'opacité correspond alors au rapport réflectance sur fond kraft/réflectance sur fond barrière blanc.

Dans le tableau 3 ci-dessous sont indiquées les valeurs d'opacité des stratifiés de formette préparée avec le dioxyde de titane A (+ ajout du polymère cationique lors de l'ajustage du pH) et avec le dioxyde de titane C, en présence de différentes quantités de Nadavin LT (les taux de Nadavin LT indiqués dans le tableau 3 correspondant à la masse de Nadavin LT employée par rapport à la masse totale "fibres de cellulose + dioxyde de titane"). Il est également mentionné dans le tableau 3 la teneur (en g/m²) en dioxyde de titane de chaque formette.

## TABLEAU 3

| | Taux de "Nadavin LT" | | | | | |
|---|---|---|---|---|---|---|
| | 1 % | | 3 % | | 5 % | |
| TiO2 employé | TiO2 (g/m²) | Opacité | TiO2 (g/m²) | Opacité | TiO2 (g/m²) | Opacité |
| A | 26,5 | 89,8 | 24,0 | 89,4 | 11,25 | 79,7 |
| C | 24,2 | 89,8 | 28,2 | 90,1 | 23,2 | 88,4 |

Le produit selon l'invention est moins sensible à l'action de l'agent d'amélioration de la résistance à l'état humide que le dioxyde de titane de l'art antérieur utilisé avec ajout du polymère cationique lors de la préparation de la formette.

Exemple 4

On détermine ici l'opacité de stratifiés de formette à grammage de dioxyde de titane égal, le dioxyde de titane employé étant choisi parmi les dioxyde de titane A, B et C mentionnés précédemment.

Le mode de préparation correspond à celui de l'exemple 3 (mais pas d'ajout de polymère cationique lors de l'ajustage du pH dans les cas A et B), le taux d'agent d'amélioration de la résistance à l'état humide variant suivant les dioxydes de titane de manière à obtenir une teneur de la formette en dioxyde de titane de 24,5 g/m².

Les résultats sont donnés dans le tableau 4.

TABLEAU 4

| TiO2 | Opacité |
|---|---|
| A | 88,7 |
| B | 88,9 |
| C | 89,6 |

Cette amélioration de l'opacité dans le cas où le dioxyde de titane C selon l'invention est employé se traduit, pour une opacité recherchée de 88,9 par exemple, par une économie substantielle de dioxyde de titane d'environ 15 % en poids.

**Revendications**

1. Procédé de préparation de papier dans lequel on utilise comme pigment opacifiant au moins une particule de dioxyde de titane à la surface de laquelle est adsorbée au moins un polymère cationique, choisi parmi les copolymères d'acrylamide avec un monomère cationique ou un homopolymère de chlorure de diallyldialkylammonium, caractérisé en ce que la particule est obtenue par pulvérisation d'une solution aqueuse du polymère cationique à la surface de la particule de dioxyde de titane puis séchage entre 110 et 200°C.

2. Procédé de préparation de lamifié à base de papier dans lequel on utilise comme pigment opacifiant au moins une particule de dioxyde de titane selon la revendication 1.

3. Procédé de préparation de lamifié à base de papier pour postformage dans lequel on utilise comme pigment opacifiant au moins une particule de dioxyde de titane selon la revendication 1.

4. Procédé selon l'une quelconque des revendications précédentes, caractérisé en ce que ledit dioxyde de titane est sous forme rutile ou anatase.

5. Procédé selon la revendication 4, caractérisé en ce que ledit dioxyde de titane est sous forme rutile.

6. Procédé selon l'une quelconque des revendications précédentes, caractérisé en ce que la teneur en polymère cationique dans la particule est comprise entre 0,05 et 10 % en poids.

7. Procédé selon la revendication 6, caractérisé en ce que ladite teneur est comprise entre 0,1 et 1,5 % en poids.

8. Procédé selon l'une quelconque des revendications précédentes, caractériséeen ce que la particule de dioxyde de titane présente un point isoélectrique (PIE) d'au moins 5,5.

9. Procédé selon la revendication 8, caractérisé en ce que la particule de dioxyde de titane présente un point isoélectrique d'au moins 7.

10. Procédé selon la revendication 9, caractérisée en ce que la particule de dioxyde de titane présente un point isoélectrique d'au moins 8,5.

11. Procédé selon l'une des revendications 1 à 10, caractérisé en ce que la particule de dioxyde de titane a subi un traitement de surface minéral préalablement au dépôt dudit polymère.

12. Procédé selon la revendication 11, caractérisé en ce que la surface de la particule de dioxyde de titane est formée d'une couche minérale formée d'au moins un composé choisi parmi les oxydes et les oxyhydroxydes de silicium, d'aluminium, de titane, de zinc, de zirconium, de cérium et d'antimoine, éventuellement en mélange avec des phosphates.

13. Procédé selon l'une des revendications 1 à 12, caractérisé en ce que ledit polymère cationique présente une masse moléculaire moyenne comprise entre 10 000 et 3 000 000.

14. Procédé selon l'une des revendications 1 à 13, caractérisé en ce que le monomère cationique est choisi parmi les sels de diallyldialkyl ammonium, les sels d'acrylate et de méthacrylate d'alkyltrialkyl ammonium, les sels d'acrylate et de méthacrylate d'hydroxyalkyltrialkyl ammonium, les sels d'acrylate et de méthacrylate d'alkyldialkyl sulfonium, les sels d'ammonium quaternaire d'acrylates et de méthacrylates d'aminoalkyle.

15. Procédé selon la revendication 14, caractérisé en ce que le monomère cationique est choisi dans le groupe formé par le chlorure de diallyldiméthyl ammonium, le chlorure de diallyldiéthyl ammonium, le chlorure ou le méthyl-sulfate de méthacrylate d'éthyltriméthylammonium, le chlorure de méthacrylate d'hydroxypropyltriméthylammonium, le méthyl-sulfate d'acrylate d'éthyldiméthylsulfonium, les sels d'ammonium quaternaire de méthacrylate d'aminoéthyle.

16. Procédé selon la revendication 15, caractérisé en ce que le polymère est un copolymère de chlorure de diallyldiméthyl ammonium et d'acrylamide.

17. Procédé selon l'une des revendications 1 à 13, caractérisé en ce que le polymère cationique est un homopolymère de chlorure de diallyldiméthyl ammonium.

**Patentansprüche**

1. Verfahren zur Herstellung von Papier, bei dem man als opazifierendes Pigment mindestens ein Titandioxidteilchen verwendet, an dessen Oberfläche mindestens ein kationisches Polymer adsorbiert ist, ausgewählt unter den Copolymeren von Acrylamid mit einem kationischen Monomer oder einem Homopolymer von Diallyldialkyl-ammoniumchlorid, dadurch gekennzeichnet, daß das Teilchen durch Versprühen einer wäßrigen Lösung des kationischen Polymers auf der Oberfläche des Titandioxidteilchens und anschließende Trocknung zwischen 110 °C und 200 °C erhalten wird.

2. Verfahren zur Herstellung von Laminat auf der Basis von Papier, bei dem man als opazifierendes Pigment mindestens ein Titandioxidteilchen nach Anspruch 1 verwendet.

3. Verfahren zur Herstellung von Laminat auf der Basis von Papier für das Nachformen, bei dem man als opazifierendes Pigment mindestens ein Titandioxidteilchen nach Anspruch 1 verwendet.

4. Verfahren nach irgendeinem der vorstehenden Ansprüche, dadurch gekennzeichnet, daß das genannte Titandioxid in Form von Rutil oder Anatas vorliegt.

5. Verfahren nach Anspruch 4, dadurch gekennzeichnet, daß das genannte Titandioxid in Form von Rutil vorliegt.

6. Verfahren nach irgendeinem der vorstehenden Ansprüche, dadurch gekennzeichnet, daß der Gehalt an kationischem Polymer in dem Teilchen zwischen 0,05 Gew.-% und 10 Gew.-% beträgt.

7. Verfahren nach Anspruch 6, dadurch gekennzeichnet, daß der genannte Gehalt zwischen 0,1 Gew.-% und 1,5 Gew.-% beträgt.

8. Verfahren nach irgendeinem der vorstehenden Ansprüche, dadurch gekennzeichnet, daß das Titandioxidteilchen einen isoelektrischen Punkt (PIE) von mindescens 5,5 aufweist.

9. Verfahren nach Anspruch 8, dadurch gekennzeichnet, daß das Titandioxidteilchen einen isoelektrischen Punkt von mindestens 7 aufweist.

10. Verfahren nach Anspruch 9, dadurch gekennzeichnet, daß das Titandioxidteilchen einen isoelektrischen Punkt von mindestens 8,5 aufweist.

11. Verfahren nach einem der Ansprüche 1 bis 10, dadurch gekennzeichnet, daß das Titandioxidteilchen zuvor einer Behandlung der mineralischen Oberfläche zur Ablagerung des genannten Polymers unterzogen wird.

12. Verfahren nach Anspruch 11, dadurch gekennzeichnet, daß die Oberfläche des Titandioxidteilchens aus einer mineralischen Schicht besteht, die aus mindestens einer Verbindung, ausgewählt unter den Oxiden und den Oxyhydroxiden von Silicium, Aluminium, Titan, Zink, Zirkonium, Cer und Antimon, gegebenenfalls in Mischung mit Phosphaten, gebildet wird.

13. Verfahren nach einem der Ansprüche 1 bis 12, dadurch gekennzeichnet, daß das genannte kationische Polymer eine mittlere Molekularmasse zwischen 10.000 und 3.000.000 aufweist.

14. Verfahren nach einem der Ansprüche 1 bis 13, dadurch gekennzeichnet, daß das kationische Monomer unter den Salzen von Diallyldialkyl-ammonium, den Acrylat- und Methacrylatsalzen von Alkyltrialkyl-ammonium, den Acrylat- und Methacrylatsalzen von Hydroxyalkyltrialkyl-ammonium, den Acrylat- und Methacrylatsalzen von Alkyldialkyl-sulfonium und den quaternären Ammoniumsalzen von Acrylaten und Methacrylaten von Aminoalkyl ausgewählt wird.

15. Verfahren nach Anspruch 14, dadurch gekennzeichnet, daß das kationische Monomer aus der Gruppe gewählt wird, die gebildet wird durch Diallyldimethyl-ammoniumchlorid, Diallyldiethylammoniumchlorid, Chlorid oder Methylsulfat von Ethyltrimethylammonium-methacrylat, Chlorid von Hydroxypropyltrimethyl-ammonium-methacrylat, Methylsulfat von Ethyldimethyl-sulfoniumacrylat, die quaternären Ammoniumsalze von Aminoethyl-methacrylat.

16. Verfahren nach Anspruch 15, dadurch gekennzeichnet, daß das Polymer ein Copolymer von Diallyldimethyl-ammoniumchlorid und Acrylamid ist.

17. Verfahren nach einem der Ansprüche 1 bis 13, dadurch gekennzeichnet, daß das kationische Polymer ein Homopolymer von Diallyldimethyl-ammoniumchlorid ist.

**Claims**

1. A process for preparing paper in which at least one titanium dioxide particle is used as an opacifying pigment, on the surface of which at least one cationic polymer has been adsorbed, the cationic polymer being selected from copolymers of acrylamide with a cationic monomer or a diallyldialkyl ammonium chloride homopolymer, characterized in that the particle is obtained by spraying an aqueous solution of the cationic polymer onto the surface of the titanium dioxide particle then drying at between 110°C and 200°C.

2. A process for preparing a paper based laminate, in which at least one titanium dioxide particle in accordance with claim 1 is used as an opacifying pigment.

3. A process for preparing a paper based laminate for postforming, in which at least one titanium dioxide particle in accordance with claim 1 is used as an opacifying pigment.

4. A process according to any one of the preceding claims, characterized in that the titanium dioxide is in the rutile or anatase form.

5. A process according to claim 4, characterized in that said titanium dioxide is in the rutile form.

6. A process according to any one of the preceding claims, characterized in that the quantity of cationic polymer in the particle is in the range 0.05% to 10% by weight.

7. A process according to claim 6, characterized in that said quantity is in the range 0.1% to 1.5% by weight.

8. A process according to any one of the preceding claims, characterized in that the titanium dioxide particle has an isoelectric point (IEP) of at least 5.5.

9. A process according to claim 8, characterized in that the titanium dioxide particle has an isoelectric point of at least 7.

10. A process according to claim 9, characterized in that the titanium dioxide particle has an isoelectric point of at least 8.5.

11. A process according to any one of claims 1 to 10, characterized in that the titanium dioxide particle has undergone a mineral surface treatment prior to deposition of said polymer.

12. A process according to claim 11, characterized in that the surface of the titanium dioxide particle is formed by a mineral layer formed by at least one compound selected from oxides and oxyhydroxides of silicon, aluminium, titanium, zinc, zirconium, cerium and antimony, optionally mixed with phosphates.

13. A process according to any one of claims 1 to 12, characterized in that said cationic polymer has a mean molecular mass which is in the range 10000 to 3000000.

14. A process according to any one of claims 1 to 13, characterized in that the cationic monomer is selected from diallyldialkyl ammonium salts, alkyltrialkyl ammonium acrylate and methacrylate salts, hydroxyalkyltrialkyl ammonium acrylate and methacrylate salts, alkyldialkyl sulphonium acrylate and methacrylate salts, and quaternary ammonium salts of aminoalkyl acrylates and methacrylates.

15. A process according to claim 14, characterized in that the cationic monomer is selected from the group formed by diallyldimethyl ammonium chloride, diallyldiethyl ammonium chloride, ethyltrimethyl ammonium methacrylate chloride or methyl-sulphate, hydroxypropyltrimethyl ammonium methacrylate chloride, ethyldimethyl sulphonium acrylate methyl sulphate, and quaternary ammonium salts of aminoethyl methacrylate.

16. A process according to claim 15, characterized in that the polymer is a copolymer of a diallyldimethyl ammonium chloride and acrylamide.

17. A process according to any one of claims 1 to 13, characterized in that the cationic polymer is a diallyldimethyl ammonium chloride homopolymer.